# EUROPÄISCHE PATENTANMELDUNG

(11) **EP 4 102 662 A1**
(43) Veröffentlichungstag der Anmeldung: **14.12.2022**
(21) Anmeldenummer: 22178026.5
(22) Anmeldetag: 09.06.2022
(51) Int. Cl.: H02G 3/08, H02G 3/14, B67B 7/16, H01H 9/02, H01R 13/74, H02G 3/10

(54) **INSTALLATIONSEINRICHTUNG UND ELEKTROINSTALLATION MIT DIESER INSTALLATIONSEINRICHTUNG**

(30) Priorität: 09.06.2021 DE 102021002946
(71) Anmelder: Marckophon Elektrotechnik für Möbel Handels- und Produktions-GmbH, 51674 Wiehl (DE)
(72) Erfinder: LUTTER, Peter, 51674 Wiehl (DE); DEUBEL, Markus, 51674 Wiehl (DE)
(74) Vertreter: Alt, Michael

(57) **Zusammenfassung**

Installationseinrichtung ist ausgestaltet zum Montieren in einem Kombinationsrahmen insbesondere gemeinsam mit wenigstens einer Steckdose oder mit einem elektrischen Schalter. Die Installationseinrichtung weist eine Tragplatte auf, welche zur Wandmontage oder zum Montieren an einer Unterputzdose ausgestaltet ist, insbesondere ausgestaltet zum Montieren gemeinsam mit bzw. innerhalb des Kombinationsrahmens. Die Installationseinrichtung weist ein Kronkorkeneingriffselement auf, das durch die Tragplatte abgestützt ist. Das Kronkorkeneingriffselement kann mit der Tragplatte insbesondere mechanisch verbunden sein. So kann die an einer Wand montierte Tragplatte Kräfte aus dem Betrieb des Kronkorkeneingriffselement abstützen bzw. in die Wand übertragen.

## Beschreibung

Die vorliegende Erfindung betrifft eine Installationseinrichtung, welche zum Montieren gemeinsam mit bzw. in einem Kombinationsrahmen ausgestaltet ist, insbesondere gemeinsam mit wenigstens einer Steckdose oder einem elektrischen Schalter.

Es sind wandmontierte Elektroinstallationen mit einem Kombinationsrahmen bekannt, welcher mehrere nebeneinander angeordnete Steckdosen und/oder elektrische Schalter umrahmt. Mitunter ist der Funktionsumfang solcher Elektroinstallationen als unzureichend empfunden worden.

Es ist eine Aufgabe der Erfindung, den Funktionsumfang einer wandmontierbaren Elektroinstallation zu erweitern.

Diese Aufgabe wird mit einer Installationseinrichtung entsprechend Anspruch 1 (erster Aspekt) und mit einer Elektroinstallation nach Anspruch 9 gelöst (zweiter Aspekt). Bevorzugte Ausführungsformen bilden den jeweiligen Gegenstand der abhängigen Ansprüche.

Die erfindungsgemäße Installationseinrichtung ist ausgestaltet zum Montieren gemeinsam mit bzw. in einem Kombinationsrahmen, insbesondere gemeinsam mit wenigstens einer Steckdose oder mit einem elektrischen Schalter. Die Installationseinrichtung weist eine Tragplatte auf, welche zur Wandmontage oder zum Montieren an einer Unterputzdose ausgestaltet ist, insbesondere gemeinsam mit bzw. innerhalb des Kombinationsrahmens. Die Installationseinrichtung weist ein Kronkorkeneingriffselement auf, das durch die Tragplatte abgestützt ist. Das Kronkorkeneingriffselement kann mit der Tragplatte insbesondere mechanisch verbunden sein. So kann die an einer Wandung montierte Tragplatte Kräfte aus dem Betrieb des Kronkorkeneingriffselements abstützen bzw. in die Wandung übertragen.

Unter einer Tragplatte im Sinne der Erfindung ist eine Platte insbesondere mit einem Metall und/oder einem Kunststoff zu verstehen, welche zum Befestigen an einer Wandung oder an einer Unterputzdose. Die Tragplatte weist Durchgangslöcher und/oder Schlitze für Befestigungselemente auf.

Unter einem Kombinationsrahmen im Sinne der Erfindung ist ein Körper mit einem, zwei oder mehreren Rahmenöffnungen zu verstehen, der an einer Wandung montierbar. Jede der Rahmenöffnungen kann eine Steckdose oder einen elektrischen Schalter umrahmen. Wenn der Kombinationsrahmen gemeinsam mit der Steckdose und/oder dem elektrischen Schalter montiert ist, dann ist die Steckdose bzw. der elektrische Schalter durch eine der Rahmenöffnungen zugänglich. Das Kronkorkeneingriffselement kann durch eine der Rahmenöffnungen zugänglich sein, wenn die Installationseinrichtung gemeinsam mit dem Kombinationsrahmen montiert ist.

Die erfindungsgemäße Installationseinrichtung erweitert den Funktionsumfang wandmontierbarer Elektroinstallationen und löst die zugrundeliegende Aufgabe. Die Installationseinrichtung kann sich harmonisch bzw. ästhetisch in die übergeordnete Elektroinstallation einfügen. Die Installationseinrichtung ist ohne größeren Aufwand von einer Fachkraft in die übergeordnete Elektroinstallation integrierbar.

### Bevorzugte Ausfiihrungsformen

Nachfolgend sind bevorzugte Ausführungsformen der Installationseinrichtung beschrieben, welche ohne gegenteiligen Hinweis miteinander vorteilhaft kombiniert werden können.

Bei einer Ausführungsform weist das Kronkorkeneingriffselement zwei voneinander beabstandete und im Wesentlichen parallel zueinander angeordnete Eingriffskanten zum Eingreifen mit einem Kronkorken auf. Die Eingriffskanten können metallisch ausgebildet sein. Die Eingriffskanten können Teil eines Metallblechs sein und können eine Öffnung in dem Metallblech begrenzen. Eine der Eingriffskanten kann kürzer als die andere Eingriffskante sein. Die Öffnung kann trapezförmig sein.

Das Kronkorkeneingriffselement einer weiteren Ausführungsform ist mit einem separaten Streifen ausgebildet, der mit der Tragplatte insbesondere mechanisch verbunden ist. Der Streifen kann mit der Tragplatte stoffschlüssig verbunden sein oder mittels wenigstens eines mechanischen Befestigungselements, wie beispielsweise einer Schraube oder einem Niet. Das Kronkorkeneingriffselement kann mit der Tragplatte verschweißt sein.

Bei einer anderen Ausführungsform ist das Kronkorkeneingriffselement um eine Rotationsachse gelenkig mit der Tragplatte verbunden und ist umkehrbar aus einer Ruhelage in eine Betriebsposition überführbar. Das Kronkorkeneingriffselement kann federbelastet sein, und die Feder kann beim Überführen in die Ruhelage gespannt werden. In der Ruhelage ist das Kronkorkeneingriffselement nicht betriebsbereit und kann abgedeckt sein. Das Kronkorkeneingriffselement kann in der Ruhelage lösbar verrastet sein. In der Betriebsposition kann das Kronkorkeneingriffselement mit einem Kronkorken eingreifen. Die Rotationsachse kann, wenn das Kronkorkeneingriffselement wandmontiert ist, sich im Wesentlichen horizontal erstrecken. Die Rotationsachse kann, wenn das Kronkorkeneingriffselement wandmontiert ist, oberhalb oder unterhalb des Kronkorkeneingriffselements angeordnet sein, insbesondere oberhalb oder unterhalb der Eingriffskanten. Bei dieser Ausführungsform ist einem unbeabsichtigten Anstoßen an das Kronkorkeneingriffselement begegnet. In der Ruhelage braucht das Kronkorkeneingriffselement sich nicht über den Kombinationsrahmen hinaus zu erstrecken (flächenbündig).

Nach einer Ausführungsform ist das Kronkorkeneingriffselement gegenüber der Tragplatte aus der Ruhelage umkehrbar translatorisch in die Betriebsposition überführbar, insbesondere senkrecht zur Tragplatte verschiebbar. Das Kronkorkeneingriffselement kann federbelastet sein und die Feder kann beim Überführen in die Ruhelage gespannt werden. In der Ruhelage ist das Kronkorkeneingriffselement nicht betriebsbereit und kann abgedeckt sein. Das Kronkorkeneingriffselement kann in der Ruhelage lösbar verrastet sein. In der Betriebsposition kann das Kronkorkeneingriffselement mit einem Kronkorken eingreifen. Bei dieser Ausführungsform ist einem unbeabsichtigten Anstoßen an das Kronkorkeneingriffselement begegnet. In der Ruhelage braucht das Kronkorkeneingriffselement sich nicht über den Kombinationsrahmen hinaus zu erstrecken (flächenbündig).

Bei einer weiteren Ausführungsform ist das Kronkorkeneingriffselement mit einem Streifen ausgebildet, welcher aus der Tragplatte teilweise freigeschnitten ist. Das Kronkorkeneingriffselement kann zwei Eingriffskanten aufweisen, welche beim Freischneiden des Streifens ausgebildet werden. Das Freischneiden kann durch Stanzen erfolgen. Beim Stanzen kann ein Abschnitt des Streifens gegenüber einem anderen Abschnitt des Streifens abgewinkelt werden und einer der Abschnitte kann die Eingriffskanten aufweisen. Beim Stanzen kann eine Sicke in den Streifen eingebracht werden, welche zum Beibehalten des Winkels zwischen den beiden Abschnitten dienen bzw. wirken kann.

Bei einer anderen Ausführungsform ist das Kronkorkeneingriffselement mit einem Streifen ausgebildet. Ein erster Schenkel des Streifens weist die beiden Eingriffskanten auf und ein zweiter Schenkel des Streifens dient zum Abstützen des ersten Schenkels insbesondere gegenüber Kräften aus dem Betrieb der Eingriffskanten. Die beiden Schenkel können zueinander abgewinkelt sein. Der Streifen kann eine Sicke aufweisen, welche zum Beibehalten des Winkels zwischen den Schenkeln dienen bzw. wirken kann. Einer der Schenkel kann mit der Tragplatte insbesondere mechanisch verbunden sein, während der andere Schenkel sich wenigstens in der Betriebsposition an der Tragplatte abstützt.

Nach einer Ausführungsform ist das Kronkorkeneingriffselement mit wenigstens einer Sicke gegen Verformen beim Benutzen verstärkt. Wenn das Kronkorkeneingriffselement mit den beiden Schenkeln ausgebildet ist, die miteinander einen Winkel bilden, dann kann eine solche Sicke zum Beibehalten dieses Winkels dienen bzw. wirken.

Bei einer weiteren Ausführungsform weist die Installationseinrichtung zudem einen elektrischen Anschluss auf. Dieser elektrische Anschluss kann eine LED versorgen oder einen Treiber für einen Lautsprecher. Der Treiber kann mittels bluetooth mit Daten für wenigstens ein Audiosignal bespielbar sein. Der elektrische Anschluss kann beim Überführen des Kronkorkeneingriffselements in die Betriebsposition aktiviert werden oder wenn ein unabhängiger Körper sich der Installationseinrichtung annähert. Der elektrische Anschluss kann beim Überführen des Kronkorkeneingriffselements in die Ruhelage aktiviert werden.

Entsprechend dem zweiten Aspekt weist eine Elektroinstallation einen Kombinationsrahmen und eine der vorgenannten Installationseinrichtungen auf. Eine Rahmenöffnung des Kombinationsrahmens nimmt die Installationseinrichtung auf. Die Tragplatte kann dabei an einer Wand befestigt sein oder kann eine Unterputzdose überdecken.

Eine bevorzugte Elektroinstallation weist weiter einen Abdeckrahmen insbesondere mit einem sog. Normdurchbruch 50 mm ^{∗}50 mm (DIN 49075) auf, welcher Abdeckrahmen die Tragplatte abschnittsweise überdeckt, welcher eine Ausnehmung für das Kronkorkeneingriffselement aufweist, und welcher in einer der Rahmenöffnungen des Kombinationsrahmens aufgenommen werden kann. Zumindest in der Betriebsposition erstreckt das Kronkorkeneingriffselement sich abschnittsweise aus der Ausnehmung heraus, sodass die Eingriffskanten mit einem Kronkorken eingreifen können. Der Abdeckrahmen kann mit der Tragplatte insbesondere mechanisch derart verbunden werden, dass er den Kombinationsrahmen zur Tragplatte hin drängt (montierter Zustand).

Vorzugsweise weist die Elektroinstallation eine Abdeckung auf, die mit der Tragplatte so verbunden werden kann, dass die Abdeckung den Abdeckrahmen gegen den Kombinationsrahmen drängt. Die Abdeckung passt ebenfalls in den Normdurchbruch.

Eine weitere bevorzugte Elektroinstallation weist weiter wenigstens eine Steckdose und/oder einen elektrischen Schalter auf, wobei eine erste Rahmenöffnung des Kombinationsrahmens die Installationseinrichtung aufnimmt und eine benachbarte zweite Rahmenöffnung des Kombinationsrahmens die Steckdose oder den elektrischen Schalter aufnimmt.

### Ausführungsbeispiele

Den nachfolgend beschriebenen Ausführungsbeispielen und den beigefügten Figuren kann der Fachmann weitere vorteilhafte Ausgestaltungen entnehmen.

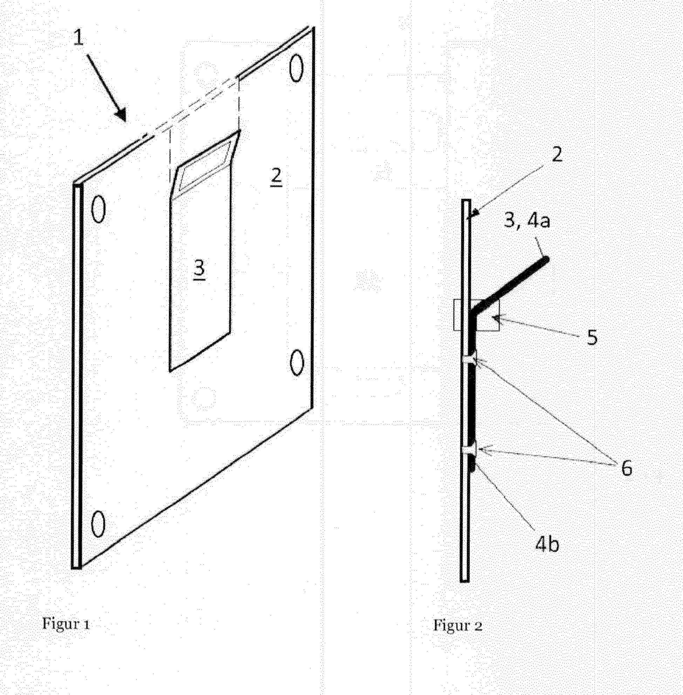

Figur 1 zeigt schematisch eine beispielhafte Installationseinrichtung 1, welche zum Montieren gemeinsam mit bzw. in einem Kombinationsrahmen insbesondere gemeinsam mit wenigstens einer Steckdose oder mit einem elektrischen Schalter ausgestaltet ist. Die Installationseinrichtung weist eine Tragplatte 2 auf, welche zur Wandmontage oder zum Montieren an einer Unterputzdose ausgestaltet ist, insbesondere ausgestaltet zum Montieren gemeinsam mit bzw. innerhalb des Kombinationsrahmens. Die Installationseinrichtung weist ein Kronkorkeneingriffselement 3 auf, das durch die Tragplatte abgestützt ist. Das Kronkorkeneingriffselement kann mit der Tragplatte insbesondere mechanisch verbunden sein. So kann die an einer Wand montierte Tragplatte Kräfte aus dem Betrieb des Kronkorkeneingriffselement abstützen bzw. in die Wand übertragen.

Die Tragplatte 2 kann mit einem Metallblech oder einer Kunststoffplatte ausgebildet sein. Die Tragplatte kann vier Durchgangslöcher zum Befestigen der Tragplatte aufweisen. Wenn die Tragplatte an einer Wand montiert ist, dann kann die Tragplatte Kräfte aus dem Betrieb des Kronkorkeneingriffselement 3 abstützen bzw. in die Wand übertragen. Das Kronkorkeneingriffselement kann mit einem Metallblech ausgebildet sein, welches zwei Eingriffskanten für einen Kronkorken aufweist. Das Kronkorkeneingriffselement kann einem Kunststoffstreifen und einer Metallplatte ausgebildet sein. Das Metallblech kann zwei Eingriffskanten für einen Kronkorken aufweisen und kann mit dem Kunststoffstreifen insbesondere mechanisch oder stoffschlüssig verbunden sein. Der Kunststoffstreifen kann mittels Spritzguss hergestellt und die Metallplatte kann umspritzt sein.

Figur 2 zeigt eine weitere beispielhafte Installationseinrichtung, bei welchem das Kronkorkeneingriffselement 3 der Installationseinrichtung 1 mit einem Streifen oder Blechstreifen ausgebildet ist. Ein erster Schenkel 4a des Streifens weist die beiden Eingriffskanten (nicht dargestellt) auf und ein zweiter Schenkel 4b des Streifens dient zum Abstützen des ersten Schenkels insbesondere gegenüber Kräften aus dem Betrieb der Eingriffskanten. Der erste Schenkel ist gegenüber dem zweiten Schenkel abgewinkelt. In den Streifen ist eine Sicke 5 (nur schematisch gezeigt) eingebracht, welche zum Beibehalten des Winkels zwischen den Schenkeln dient. Der zweite Schenkel 4b ist mit der Tragplatte 2 mittels zweier Befestigungselemente 6 verbunden. Die Tragplatte kann mit einem Stahlblech der Stärke 1 mm ausgebildet sein. Schrauben oder Niete können die Befestigungselemente bilden.

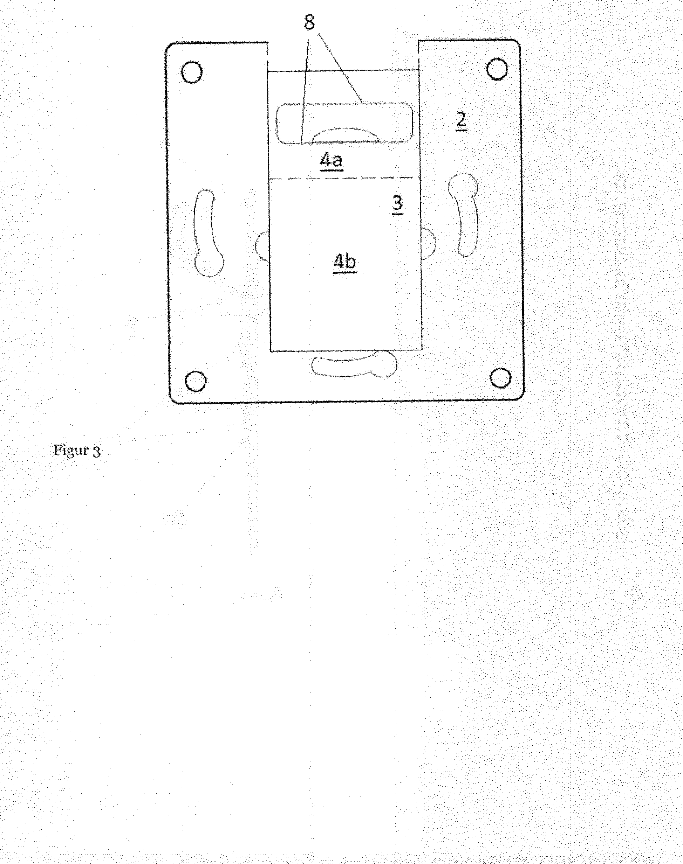

Figur 3 zeigt eine Variante der in Figur 1 gezeigten beispielhaften Installationseinrichtung. In den Ecken der Tragplatte 2 ist je ein Durchgangsloch zum Befestigen der Tragplatte angeordnet. Weiter weist die Tragplatte gekrümmte Schlitze ebenfalls zum Befestigen der Tragplatte auf. Ein Schenkel 4b des Kronkorkeneingriffselements 3 ist mit der Tragplatte verbunden. Ein anderer Schenkel 4a weist zwei parallele Eingriffskanten 8 zum Eingreifen mit einem Kronkorken auf.

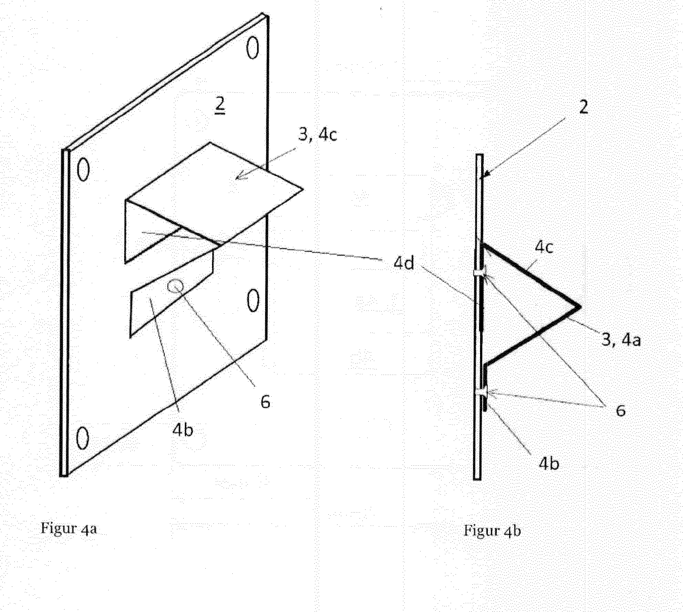

Figuren 4a, 4b zeigen schematisch ein weiteres Beispiel einer Installationseinrichtung 1. In den Ecken der Tragplatte 2 ist je ein Durchgangsloch angeordnet zum Befestigen der Tragplatte insbesondere an einer Wand. Das Kronkorkeneingriffselement 3 ist mit einem mehrfach abgewinkelten Blechstreifen ausgebildet. Der erste Schenkel 4a des Kronkorkeneingriffselements weist die Eingriffskanten auf. Weitere Schenkel 4b, 4d sind mit der Tragplatte verbunden mittels Befestigungselementen. Ein anderer Schenkel 4c erstreckt sich zwischen dem ersten Schenkel 4a und Schenkel 4d und stützt den ersten Schenkel zusätzlich ab. Der Schenkel 4c deckt auch die Eingriffskanten (nicht dargestellt) des ersten Schenkels nach oben ab. Die Tragplatte kann mit einem Stahlblech insbesondere der Stärke 1 mm ausgebildet sein und das Kronkorkeneingriffselement kann ein Stahlblech insbesondere der Stärke 2 mm aufweisen.

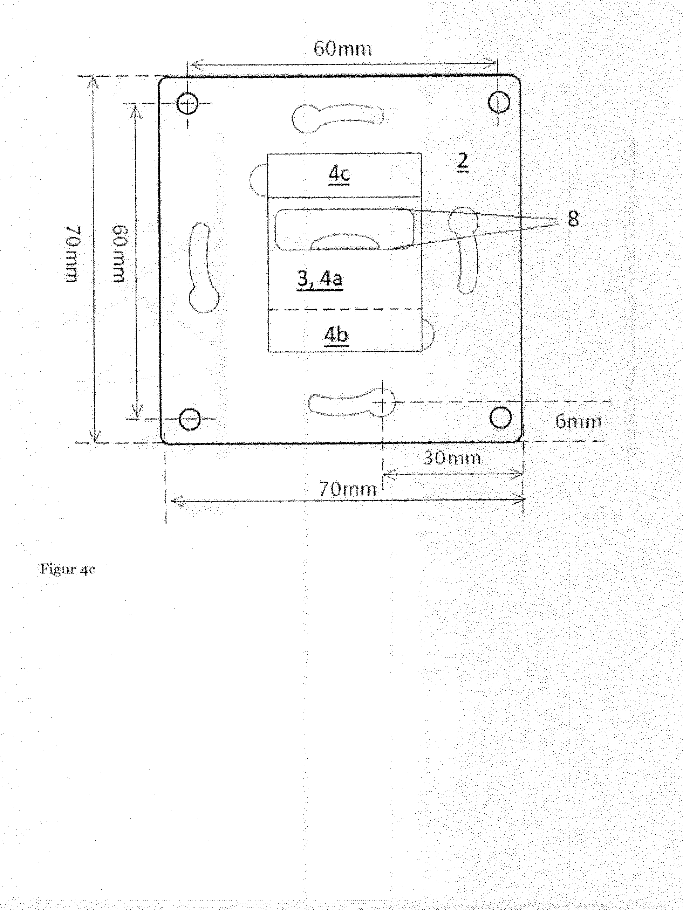

Figur 4c zeigt eine Variante der in den Figuren 4a, 4b gezeigten beispielhaften Installationseinrichtung. Das Kronkorkeneingriffselement 3 ist ebenfalls mit vier Schenkeln 4a, 4b, 4c, 4d ausgebildet und der vierte Schenkel 4d ist überdeckt. Der erste Schenkel 4a weist die Eingriffskanten 8 auf. Das Kronkorkeneingriffselement, insbesondere deren Schenkel 4b, 4d sind mit der Tragplatte mechanisch verbunden. Die Tragplatte 2 ist quadratisch, hat mehrere Durchganglöcher und Schlitze zum Befestigen der Tragplatte insbesondere an einer Wand. Die Tragplatte kann aus Kunststoff ausgebildet sein und das Kronkorkeneingriffselement mit einem Stahlblech insbesondere der Stärke 2 mm. Wenn die Tragplatte aus Kunststoff ausgebildet ist, dann sind Niete als Befestigungselemente zu bevorzugen. Die angegebenen Maße sind beispielhaft und die Installationseinrichtung kann davon abweichen.

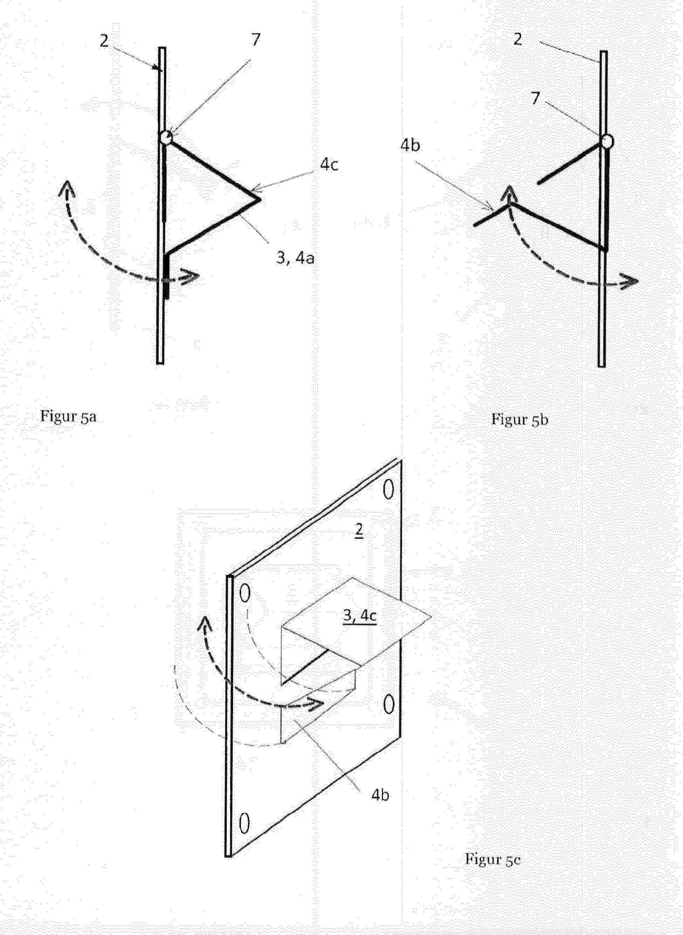

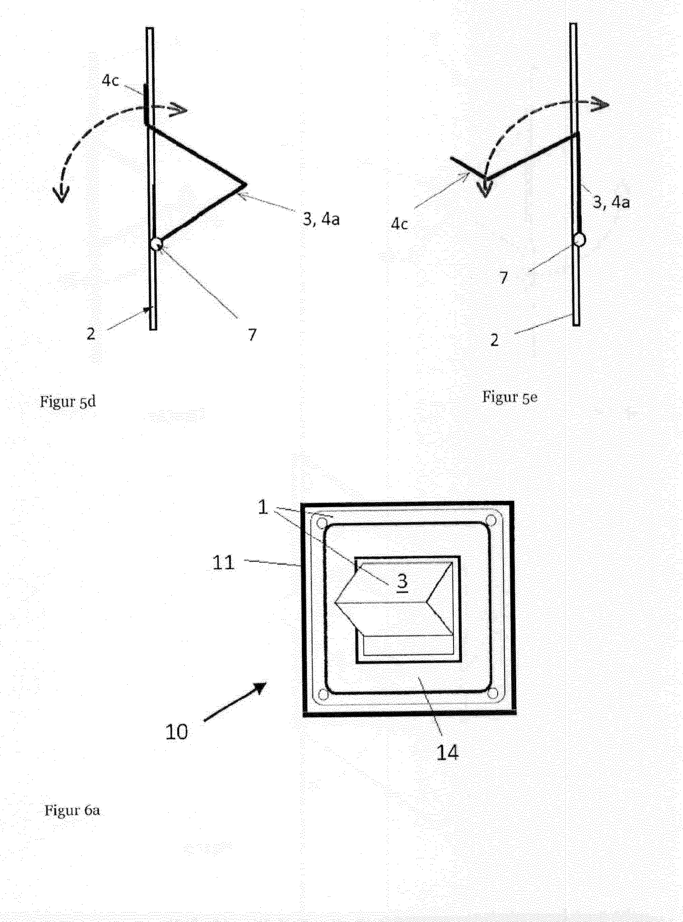

Figur 5 zeigt ein anderes Ausführungsbeispiel, bei welchem das Kronkorkeneingriffselement 3 um eine Rotationsachse 7 gelenkig mit der Tragplatte 2 verbunden und umkehrbar aus einer Ruhelage (Figur 5b) in eine Betriebsposition (Figuren 5a, 5c) verschwenkt werden kann. Das Kronkorkeneingriffselement weist mehrere Schenkel auf und ist mit einem Stahlblech insbesondere der Stärke 2 mm ausgebildet. Der erste Schenkel 4a weist die Eingriffskanten (nicht gezeigt) auf. Das Kronkorkeneingriffselement kann federbelastet sein und die nicht dargestellte Feder kann beim Überführen in die Ruhelage gespannt werden. In der Ruhelage (Figur 5b) kann das Kronkorkeneingriffselement verrastet sein (nicht dargestellt). Figur 5a zeigt schematisch, dass der Schenkel 4b sich in der Betriebsposition an der Tragplatte abstützt.

Die Tragplatte kann ausgestaltet und dimensioniert sein, wie in Figur 4c gezeigt ist. Alternativ kann die Rotationsachse 7 den Schenkel 4a gelenkig mit der Tragplatte verbinden, siehe Figuren 5d.

Figur 6a zeigt schematisch eine beispielhafte Elektroinstallation 10 aufweisend einen Kombinationsrahmen 11 sowie eine beispielhafte Installationseinrichtung 1. Eine Rahmenöffnung des Kombinationsrahmens nimmt die Installationseinrichtung auf. Die Tragplatte der Installationseinrichtung kann von einem Abdeckrahmen 14 überdeckt sein, welcher ebenfalls in der Rahmenöffnung aufgenommen ist. Die Eingriffskanten des Kronkorkeneingriffselements sind nicht gezeigt. Der Abdeckrahmen kann mit der Tragplatte mechanisch verbunden sein und dabei den Kombinationsrahmen klemmen und/oder zentrieren. Wenn die Elektroinstallation auch den Abdeckrahmen aufweist, dann ist das Kronkorkeneingriffselement 3 durch den Abdeckrahmen zugänglich.

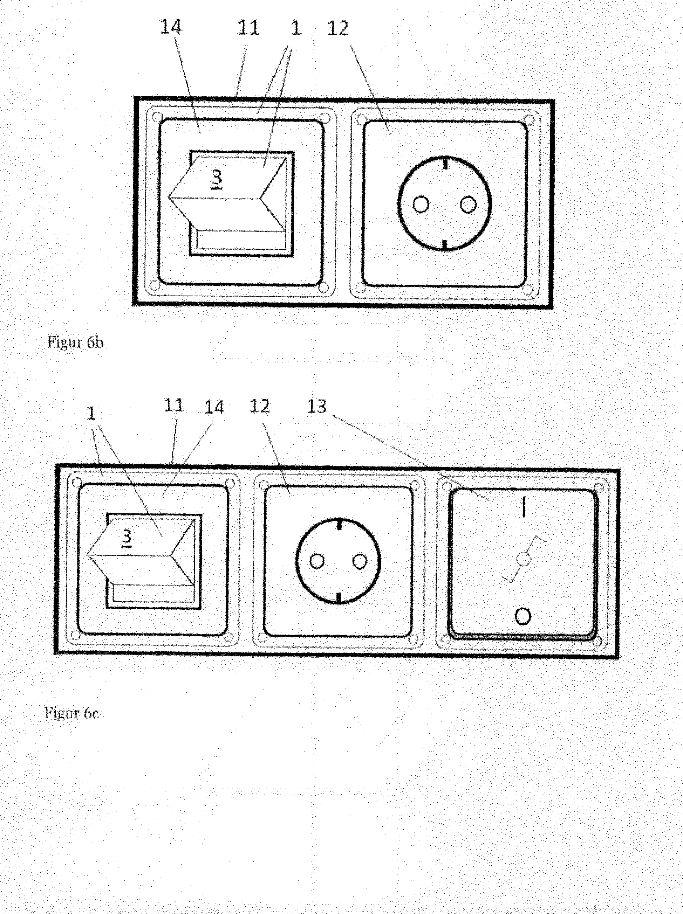

Figur 6b zeigt eine weitere beispielhafte Elektroinstallation 10 aufweisend einen Kombinationsrahmen 11 und eine beispielhafte Installationseinrichtung 1, welche in einer ersten Rahmenöffnung des Kombinationsrahmens aufgenommen ist. Ferner weist die Elektroinstallation eine Steckdose 12 auf, die in einer benachbarten zweiten Rahmenöffnung des Kombinationsrahmens aufgenommen ist. Die Tragplatte der Installationseinrichtung kann von einem Abdeckrahmen 14 überdeckt sein, welcher ebenfalls in der ersten Rahmenöffnung aufgenommen ist. Die Eingriffskanten des Kronkorkeneingriffselements sind nicht gezeigt. Der Abdeckrahmen kann mit der Tragplatte mechanisch verbunden sein und dabei den Kombinationsrahmen klemmen und/oder zentrieren. Wenn die Elektroinstallation auch den Abdeckrahmen aufweist, dann ist das Kronkorkeneingriffselement 3 durch den Abdeckrahmen zugänglich

Figur 6c zeigt eine weitere beispielhafte Elektroinstallation 10, welche gegenüber der in Figur 6b gezeigten Elektroinstallation zusätzlich einen Schalter 13 aufweist. Der Schalter ist in einer dritten Rahmenöffnung des Kombinationsrahmen 11 aufgenommen. Die Eingriffskanten des Kronkorkeneingriffselements sind nicht gezeigt. Alternativ können die Installationseinrichtung, die Steckdose und der Schalter übereinander angeordnet sein.

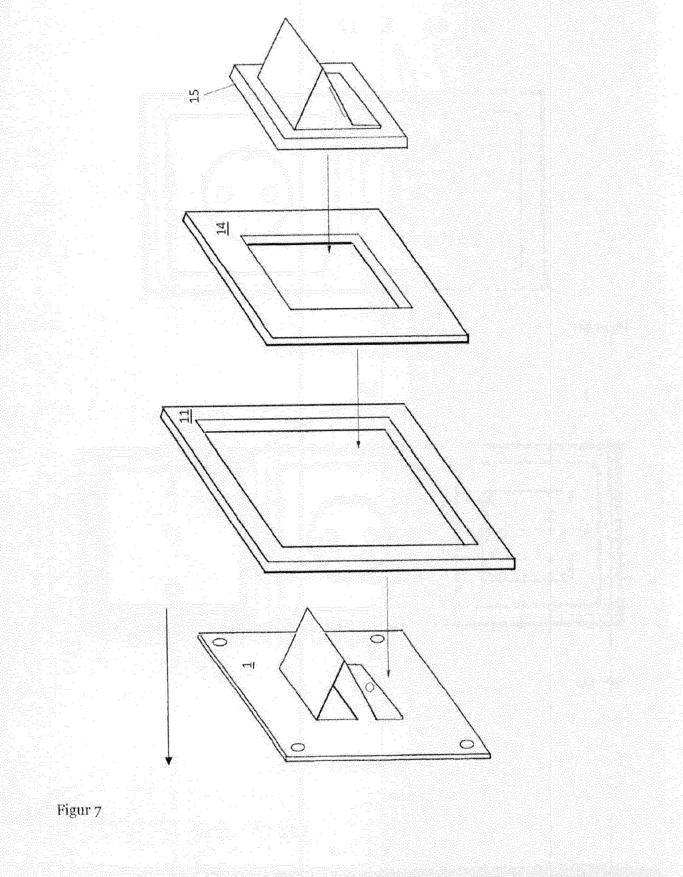

Figur 7 zeigt mittels eines Pfeils, wie der Kombinationsrahmen 2 und der Abdeckrahmen 14 mit der Installationseinrichtung montiert werden. Der Abdeckrahmen, welcher den Normdurchbruch 50 mm ^{∗} 50 mm aufweist, kann mit der Installationseinrichtung mechanisch verbunden werden, insbesondere verschraubt oder verrastet. Der Abdeckrahmen kann dabei den Kombinationsrahmen einklemmen und/oder zentrieren. Das Kronkorkeneingriffselement ist durch den Normdurchbruch zugänglich, wenn der Kombinationsrahmen, der Abdeckrahmen und die Installationseinrichtung montiert sind.

Die in Figur 7 ebenfalls gezeigte Abdeckung 15 ist optional. Wenn auch die Abdeckung montiert wird, dann kann diese mit der Installationseinrichtung mechanisch verbunden werden, insbesondere verschraubt oder verrastet. Dabei können der Abdeckrahmen und der Kombinationsrahmen eingeklemmt und/oder zentriert werden.

### Bezugszeichen

- 1: Installationseinrichtung
- 2: Tragplatte
- 3: Kronkorkeneingriffselement
- 4: Schenkel des Kronkorkeneingriffselements
- 5: Sicke
- 6: Befestigungselement
- 7: Rotationsachse
- 8: Eingriffskante
- 10: Elektroinstallation
- 11: Kombinationsrahmen
- 12: Steckdose
- 13: Schalter
- 14: Abdeckrahmen
- 15: Abdeckung

## Patentansprüche

1. Installationseinrichtung (1), ausgestaltet zum Montieren gemeinsam mit bzw. in einem Kombinationsrahmen insbesondere gemeinsam mit wenigstens einer Steckdose oder einem elektrischen Schalter, wobei die Installationseinrichtung eine Tragplatte (2) aufweist, welche zur Wandmontage oder zum Montieren an einer Unterputzdose ausgestaltet ist, insbesondere gemeinsam mit bzw. innerhalb des Kombinationsrahmens, wobei die Installationseinrichtung ein Kronkorkeneingriffselement (3) aufweist, das durch die Tragplatte abgestützt ist.

2. Installationseinrichtung nach Anspruch 1, wobei das Kronkorkeneingriffselement (3) zwei voneinander beabstandete und im Wesentlichen parallel zueinander angeordnete Eingriffskanten (8) zum Eingreifen mit einem Kronkorken aufweist.

3. Installationseinrichtung nach einem der vorhergehenden Ansprüche, wobei das Kronkorkeneingriffselement (3) mit einem separaten Streifen ausgebildet ist, der mit der Tragplatte (2) insbesondere mechanisch verbunden ist.

4. Installationseinrichtung nach einem der vorhergehenden Ansprüche, wobei das Kronkorkeneingriffselement (3) um eine Rotationsachse (7) gelenkig mit der Tragplatte (2) verbunden ist und umkehrbar aus einer Ruhelage in eine Betriebsposition überführbar ist.

5. Installationseinrichtung nach einem der vorhergehenden Ansprüche, wobei das Kronkorkeneingriffselement (3) gegenüber der Tragplatte (2) umkehrbar aus der Ruhelage in die Betriebsposition translatorisch überführbar ist, insbesondere senkrecht zur Tragplatte verschiebbar ist.

6. Installationseinrichtung nach einem der vorhergehenden Ansprüche, wobei das Kronkorkeneingriffselement (3) mit einem Streifen ausgebildet ist, welcher aus der Tragplatte (2) teilweise freigeschnitten ist.

7. Installationseinrichtung nach einem der vorhergehenden Ansprüche, wobei ein erster Schenkel (4a) des Streifens die beiden Eingriffskanten (8) aufweist und ein zweiter Schenkel (4b) zum Abstützen des ersten Schenkels gegenüber von Kräften aus dem Betrieb der Eingriffskanten dient.

8. Installationseinrichtung nach einem der vorhergehenden Ansprüche, wobei das Kronkorkeneingriffselement (3) mit wenigstens einer Sicke (5) gegen Verformen beim bzw. durch Benutzen verstärkt ist.

9. Elektroinstallation (10) aufweisend eine Installationseinrichtung (1) nach einem der vorhergehenden Ansprüche sowie einen Kombinationsrahmen (11), wobei das Kronkorkeneingriffselement (3) durch eine Rahmenöffnung des Kombinationsrahmes zugänglich ist, zumindest im montierten Zustand.

10. Elektroinstallation nach Anspruch 9, weiter aufweisend wenigstens eine Steckdose (12) oder einen elektrischen Schalter (13), wobei das Kronkorkeneingriffselement durch eine erste Rahmenöffnung des Kombinationsrahmens (11) zugänglich ist, und die Steckdose oder der elektrische Schalter durch eine benachbarte zweite Rahmenöffnung des Kombinationsrahmens zugänglich ist, zumindest im montierten Zustand.
